# EUROPEAN PATENT APPLICATION

(11) **EP 2 757 449 A1**
(43) Date of publication of application: **23.07.2014**
(21) Application number: 12831372.3
(22) Date of filing: 11.07.2012
(51) Int. Cl.: G06F 3/048

(54) **SYSTEM AND METHOD FOR CREATING FOLDER QUICKLY**

(30) Priority: 16.09.2011 CN 201110276047
(71) Applicant: Tencent Technology (Shenzhen) Co., Ltd, Futian, Guangdong 518057 (CN)
(72) Inventor: XU, Haibo, Guangdong 518057 (CN); JIANG, Junjun, Shenzhen Guangdong 518057 (CN); ZHANG, Zhijun, Shenzhen Guangdong 518057 (CN); LIU, Yufei, Shenzhen Guangdong 518057 (CN)
(74) Representative: Maiwald Patentanwalts GmbH
(86) International application number: PCT/CN2012/078505
(87) International publication number: WO 2013/037239

(57) **Abstract**

Examples of the present disclosure provides a system for creating a folder quickly, in the system, a folder creating unit is configured to, when it is determined that current touch event is a long-touch event, activate a long-touch sliding mode of the file icons; when the file icons are slid by a user toward each other under the long-touch sliding mode, obtain coordinates of locations of the slid file icons; when determining that the location distance between the file icons is less than or equal to a predetermined second threshold, release the long-touch event, activate a new folder creation mode, and automatically create a new folder based on the file icons under the new folder creation mode. Examples of the present disclosure also provides a method for creating a folder quickly, coordinates of locations of file icons being slid toward each other are obtained, when it is determined that the location distance between the file icons is less than or equal to a predetermined second threshold, the long-touch event is released, a new folder creation mode is activated, and a new folder is automatically created based on the file icons under the new folder creation mode. By adopting the system and method of the present disclosure, a folder may be created through multi-touch technology.

## Description

### Field of the Invention

The present invention relates to a file creation technology, and more particularly, to a system and method for creating a folder quickly in a mobile terminal through multi-touch operations.

### Background of the Invention

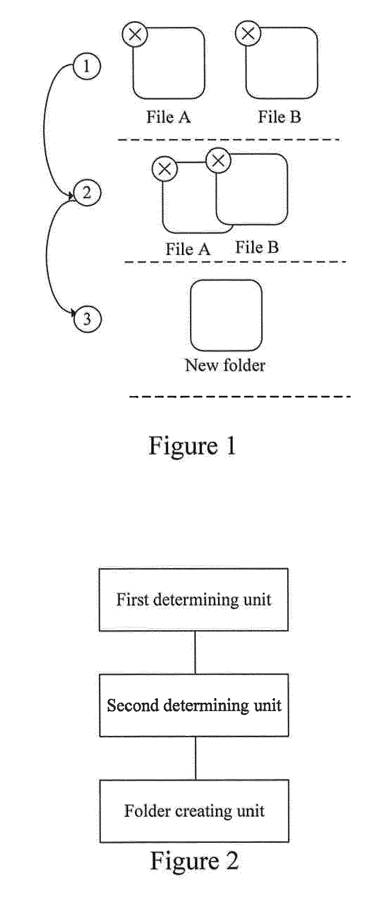

In mobile terminal field, at present, the touch technology based on a touch screen is increasingly favored by users. Files and application programs in a mobile terminal may be quickly and easily managed utilizing the touch technology. Figure 1 is a schematic diagram illustrating an example for creating a folder in a mobile terminal through single-touch operations. As shown in figure 1, there are two files on a screen of a mobile terminal, such as an iphone, and the two files are respectively file A and file B. When an icon of one of the two files is long pressed, a specific marker Ⓧ will occur on the icon, which represents that a long-touch mode is entered, as indicated by ① of figure 1. When the icon of one of the two files is pressed and held and dragged over the icon of the other file, as indicated by ② of figure 1, and when the icon which is pressed and held is released, a new folder will be created automatically. File A and file B are contained in the new folder, as indicated by ③ of figure 1.

Because of the limitation of screen size of a mobile terminal, more strict requirements are needed to achieve a quick and convenient management of files and programs, especially for folder management. With the introduction of the multi-touch technology, the scheme for creating a folder with touch technology needs to be further improved.

### Summary of the Invention

In view of above, examples of the present invention provide a system for creating a folder quickly in a mobile terminal through multi-touch operations and a method for creating a folder quickly in a mobile terminal through multi-touch operations, which can improve the scheme for creating a folder with touch technology.

The system for creating a folder quickly in a mobile terminal through multi-touch operations provided by examples of the present invention includes: a first determining unit, a second determining unit and a folder creating unit;
the first determining unit is configured to obtain a touch event; when the touch event is a multi-touch event, obtain coordinates of touch points and coordinates of locations of file icons, and determine whether the touch points are respectively located on the locations of the file icons;
the second determining unit is configured to, when the first determining unit determines that the touch points are respectively located on the locations of the file icons, determine whether the touch event is a long-touch event by calculating the duration from the time when fingers touch and hold the file icons to the time when the fingers are taken off the file icons;
the folder creating unit is configured to, when the second determining unit determines that the touch event is long-touch event, activate a long-touch sliding mode of the file icons; when the file icons are slid by a user toward each other under the long-touch sliding mode, obtain coordinates of locations of the slid file icons; when determining that the location distance between the file icons is less than or equal to a predetermined second threshold, release the long-touch event, activate a new folder creation mode, and automatically create a new folder based on the file icons under the new folder creation mode.

The method for creating a folder quickly in a mobile terminal through multi-touch operations provided by examples of the present invention includes:
obtaining a touch event; when the touch event is a multi-touch event, obtaining coordinates of touch points and coordinates of locations of file icons, and determining whether the touch points are respectively located on the locations of the file icons;
when determining that the touch points are respectively located on the locations of the file icons, determining whether the touch event is a long-touch event by calculating the duration from the time when fingers touch and hold the file icons to the time when the fingers are taken off the file icons;
when determining that the touch event is long-touch event, activate a long-touch sliding mode of the file icons; when the file icons are slid toward each other under the long-touch sliding mode, obtaining coordinates of locations of the slid file icons; when determining that the location distance between the file icons is less than or equal to a predetermined second threshold, releasing the long-touch event, activating a new folder creation mode, and automatically creating a new folder based on the file icons under the new folder creation mode.

As can be seen, in the present disclosure, a touch event is obtained, when the touch event is a multi-touch event, coordinates of touch points and coordinates of locations of file icons are obtained, and whether the touch points are respectively located on the locations of the file icons is determined; when it is determined that the touch points are respectively located on the locations of the file icons, whether the touch event is a long-touch event by calculating the touch duration is determined; when it is determined that the touch event is long-touch event, a long-touch sliding mode of the file icons is activated; when the file icons are slid toward each other under the long-touch sliding mode, coordinates of locations of the slid file icons is obtained; when it is determined that the location distance between the file icons is less than or equal to a predetermined second threshold, the long-touch event is released, a new folder creation mode is activated, and a new folder is automatically created based on the file icons under the new folder creation mode. By adopting the technical solutions of the present disclosure, a folder may be created through multi-touch technology.

### Brief Description of Drawings

Figure 1 is a schematic diagram illustrating an example for creating a folder in a mobile terminal with a single-touch technology;
Figure 2 is a schematic diagram illustrating a system for creating a folder in a mobile terminal through multi-touch operations according to an example of the present disclosure;
Figure 3 is a flowchart illustrating a method for creating a folder in a mobile terminal through multi-touch operations according to an example of the present disclosure;
Figure 4 is a schematic diagram illustrating the process for creating a folder in a mobile terminal with a multi-touch technology according to an example of the present disclosure.

### Detailed Description of the Invention

Examples of the present disclosure will be described in detail hereinafter with reference to accompanying drawings.

The touch technology based on a touch screen, especially multi-touch technology, is increasingly favored by users, files and application programs in a mobile terminal may be quickly and easily managed using the touch technology. A scheme for creating a folder in a mobile terminal based on a multi-touch technology is provided by examples of the present disclosure. The scheme for creating a folder in a mobile terminal with touch technology is improved, and a user may create a folder quickly with the scheme.

Figure 2 is a schematic diagram illustrating a system for creating a folder in a mobile terminal through multi-touch operations according to an example of the present disclosure. As shown in figure 2, the system includes a first determining unit, a second determining unit and a folder creating unit.

The first determining unit is configured to detect a touch event; when the touch event is a multi-touch event, obtain coordinates of touch points and coordinates of locations of file icons, and determine whether the touch points are respectively located on the locations of the file icons.

The second determining unit is configured to, when the first determining unit determines that the touch points are respectively located on the locations of the file icons, determine whether the touch event is a long-touch event by calculating the duration from the time when fingers touch and hold the file icons to the time when the fingers are taken off the file icons.

Whether the touch event is a long-touch event may be determined according to the followings. When the touch duration (the duration from the time when fingers touch and hold the file icons to the time when the fingers are taken off the file icons) does not reach a predetermined first threshold, a finger-release event is triggered, it is determined that the touch event is not a long-touch event. When the touch duration reaches the first threshold (i.e. the touch duration is greater than or equal to the first threshold), a finger-release event is triggered, it is determined that the touch event is a long-touch event.

The folder creating unit is configured to, when the second determining unit determines that the touch event is a long-touch event, activate a long-touch sliding mode of the file icons; when the file icons are slid toward each other under the long-touch sliding mode, obtain coordinates of locations of the slid file icons; when determining that the location distance between the file icons is less than or equal to a predetermined second threshold, release the long-touch event, activate a new folder creation mode, and automatically create a new folder based on the file icons under the new folder creation mode.

For example, if the multi-touch event is a two-point touch event, the function modules of the system for creating a folder in a mobile terminal may be the following.

The first determining unit is configured to obtain a touch event; when the touch event is a two-point touch event, obtain coordinates of two touch points and coordinates of locations of two file icons, and determine whether the touch points are respectively located on the locations of the file icons.

The second determining unit is configured to, when the first determining unit determines that the touch points are respectively located on the locations of the file icons, determine whether the touch event is a long-touch event by calculating the duration from the time when fingers tap and hold the file icons to the time when the fingers are taken off the file icons. When the duration from the time when fingers tap and hold the file icons to the time when the fingers are taken off the file icons does not reach a preset first threshold T, a finger-release event is triggered, it is determined that the touch event is not a long-touch event. When the duration from the time when fingers tap and hold the file icons to the time when the fingers are taken off the file icons reaches the first threshold, a finger-release event is triggered, it is determined that the touch event is a long-touch event.

The folder creating unit is configured to, when the second determining unit determines that the touch event is a long-touch event, activate a long-touch sliding mode of the file icons; when the two file icons are slid toward each other under the long-touch sliding mode, obtain abscissas of locations of the two slid file icons; when determining that the abscissa distance Δx between the locations of the two file icons is less than or equal to a preset second threshold D, release the long-touch event, activate a new folder creation mode, and automatically create a new folder based on the file icons under the new folder creation mode. The two file icons are contained in the new folder.

Specifically, the new folder creation based on the file icons may include the followings. When the two file icons, namely icons of file A and file B, are icons of application programs themselves, the new folder is directly created. When the two file icons, namely icons of file A and file B, are icons of shortcuts of application programs, the new folder is created after locations of source files of the application programs, namely file A and file B, are obtained according to the shortcuts.

In addition, the new folder creation may further include the following. It is prompted that whether to rename the created new folder, or name the created new folder "New Folder" by default.

Furthermore, after the prompt, the new folder creation may further include the following. The created new folder is instantly named according to an obtained file name, or is named after the prompt is skipped.

It should be noted that, when the examples of the present disclosure are implemented based on the Android platform, the process of function call based on above system examples may include the followings.

A. Because there is no multi-point long-touch event, namely OnLongClik, to be captured for Android platform, then it is needed to capture a touch event first. When two fingers touch the screen simultaneously, a callback function OnTouchEvent will be triggered, whether the touch event is a two-point touch event may be determined according to the MotionEvent.getPointerCount function in the OnTouchEvent function. OnTouchEvent callback function is configured to active a touch event, MotionEvent.getPointerCount function is configured to active the determination that whether the touch event is a two-point touch event.

B. Coordinates of locations of the two touch points may be obtained according to MotionEvent.getX(PointerId) function and MotionEvent.getY(PointerId) function, whether the two touch points are respectively located on locations of icons of the two files. MotionEvent.getX(PointerId) function and MotionEvent.getY(PointerId) function are configured respectively to obtain horizontal coordinate x and vertical coordinate y of the two touch points.

C. OnLongClick implementation for the Android platform may be simulated. A thread of CheckForLongPress function is started with postDelayed function, it is determined that whether a finger-release event (which may be ACTION_UP for the Android platform) occurs within a time period T (a preset first threshold), when no ACTION_UP occurs, a two-finger long press mode is activated, the special effects of pulling up icons of the two files may be generated. Furthermore, the special effects of shaking the icons of the two files may be generated by calling Vibrator.vibrator function at the same time. The postDelayed function is configured to calculate the time duration from the time when fingers touch and hold the file icons to the time when the fingers are taken off the file icons. The CheckForLongPress function is configured to detect whether the touch event is a long-touch event. The Vibrator.vibrator function is configured to active a shaking event. The two-finger long press mode is a mode of the long-touch event.

D. During the process of sliding the two fingers, whether the distance between icons of the two files A and B becomes smaller is determined by OnTouchEvent function. When the distance between icons of the two files A and B is less than or equal to D (the preset second threshold), a desktop folder is created, icons of the two files are putted in the created folder, simultaneously icons of the two files are removed from the desktop.

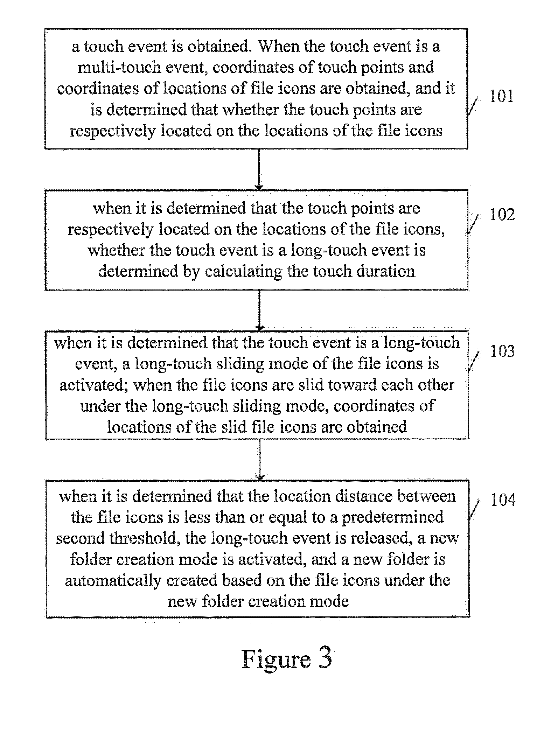

Figure 3 is a flowchart illustrating a method for creating a folder in a mobile terminal through multi-touch operations according to an example of the present disclosure. The method may include the following processes.

In block 101, a touch event is obtained. When the touch event is a multi-touch event, coordinates of touch points and coordinates of locations of file icons are obtained, and it is determined that whether the touch points are respectively located on the locations of the file icons.

In block 102, when it is determined that the touch points are respectively located on the locations of the file icons, whether the touch event is a long-touch event is determined by calculating the duration from the time when fingers touch and hold the file icons to the time when the fingers are taken off the file icons.

Whether the touch event is a long-touch event may be determined according to the followings. When the touch duration (the duration from the time when fingers touch and hold the file icons to the time when the fingers are taken off the file icons) does not reach a predetermined first threshold, a finger-release event is triggered, it is determined that the touch event is not a long-touch event. When the touch duration reaches the first threshold (i.e. the touch duration is greater than or equal to the first threshold), a finger-release event is triggered, it is determined that the touch event is a long-touch event.

In block 103, when it is determined that the touch event is a long-touch event, a long-touch sliding mode of the file icons is activated; when the file icons are slid toward each other under the long-touch sliding mode, coordinates of locations of the slid file icons are obtained.

In block 104, when it is determined that the location distance between the file icons is less than or equal to a predetermined second threshold, the long-touch event is released, a new folder creation mode is activated, and a new folder is automatically created based on the file icons under the new folder creation mode.

The new folder creation based on the file icons may include the followings. When the two file icons, namely icons of file A and file B, are icons of application programs themselves, the new folder is directly created. When the two file icons, namely icons of file A and file B, are icons of shortcuts of application programs, the new folder is created after locations of source files of the application programs, namely file A and file B, are obtained according to the shortcuts.

In addition, the new folder creation may further include the following. It is prompted that whether to rename the created new folder, or name the created new folder "New Folder" by default. Furthermore, after the prompt, the new folder creation may further include the following. The created new folder is instantly named according to an obtained file name, or is named after the prompt is skipped.

It should be noted that, when the examples of the present disclosure are implemented based on the Android platform, the process of function call based on above system examples may include the followings.

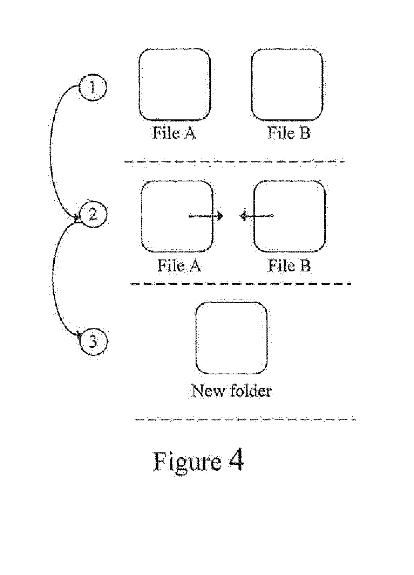

Figure 4 is a schematic diagram illustrating the process for creating a folder in a mobile terminal with a multi-touch technology according to an example of the present disclosure. The process may include the followings.
1) There are two file icons, which are respectively icons of file A and file B, on the screen of a mobile terminal, as indicated by ① of figure 4.
2) When the time duration for pressing the icons of file A and file B simultaneously by two fingers reaches T, a specific mode, namely the multi-point long-touch mode, is activated (the method for activate the specific mode includes but is not limited to the two-finger long-press method). After the specific mode is activated, the icons of file A and file B are drugged and slid toward each other by the two fingers, as indicated by ② of figure 4.

When the straight-line distance between the icons of file A and file B is less than or equal to D, the long-touch event is released, and a new folder are created automatically for file A and file B, and the new folder contains the icons of file A and file B, as indicated by ③ of figure 4.

The foregoing description is only preferred embodiments of the present invention and is not used for limiting the protection scope thereof. Any modification, equivalent substitution, or improvement made without departing from the spirit and principle of the present invention should be covered by the protection scope of the present invention.

## Claims

1. A system for creating a folder quickly, comprising: a first determining unit, a second determining unit and a folder creating unit;
the first determining unit is configured to obtain a touch event; when the touch event is a multi-touch event, obtain coordinates of touch points and coordinates of locations of file icons, and determine whether the touch points are respectively located on the locations of the file icons;
the second determining unit is configured to, when the first determining unit determines that the touch points are respectively located on the locations of the file icons, determine whether the touch event is a long-touch event by calculating the duration from the time when fingers touch and hold the file icons to the time when the fingers are taken off the file icons;
the folder creating unit is configured to, when the second determining unit determines that the touch event is a long-touch event, activate a long-touch sliding mode of the file icons; when the file icons are slid by a user toward each other under the long-touch sliding mode, obtain coordinates of locations of the slid file icons; when determining that the location distance between the file icons is less than or equal to a predetermined second threshold, release the long-touch event, activate a new folder creation mode, and automatically create a new folder based on the file icons under the new folder creation mode.

2. The system according to claim 1, wherein the second determining unit is configured to, when the duration from the time when fingers touch and hold the file icons to the time when the fingers are taken off the file icons does not reach a predetermined first threshold, a finger-release event is triggered, determine that the touch event is not a long-touch event; and when the duration from the time when fingers touch and hold the file icons to the time when the fingers are taken off the file icons reaches the first threshold, a finger-release event is triggered, determine that the touch event is a long-touch event.

3. The system according to claim 1, wherein the file creating unit is configured to, when to create a new folder based on the file icons, when the two file icons are icons of application programs themselves, directly create the new folder; when the two file icons are icons of shortcuts of application programs, create the new folder after first locations of source files of the application programs are obtained according to the shortcuts.

4. The system according to any one of claims 1 to 3, wherein the multi-touch event is two-point touch event; wherein
the first determining unit is configured to obtain a touch event; obtain coordinates of two touch points and coordinates of locations of two file icons, and determine whether the two touch points are respectively located on the locations of the two file icons;
the second determining unit is configured to, when the first determining unit determines that the two touch points are respectively located on the locations of the two file icons, determine whether the touch event is a long-touch event by calculating the duration from the time when fingers tap and hold the file icons to the time when the fingers are taken off the file icons; when the duration from the time when fingers tap and hold the file icons to the time when the fingers are taken off the file icons does not reach a preset first threshold, a finger-release event is triggered, determine that the touch event is not a long-touch event; when the duration from the time when fingers tap and hold the file icons to the time when the fingers are taken off the file icons reaches the first threshold, a finger-release event is triggered, determine that the touch event is a long-touch event;
the folder creating unit is configured to, when the second determining unit determines that the touch event is long-touch event, activate a long-touch sliding mode of the file icons; when the two file icons are slid toward each other under the long-touch sliding mode, obtain abscissas of locations of the two slid file icons; when determining that the abscissa distance between the locations of the two file icons is less than or equal to a preset second threshold, release the long-touch event, activate a new folder creation mode, and automatically create a new folder based on the file icons under the new folder creation mode.

5. A method for creating a folder quickly, comprising:
obtaining a touch event; when the touch event is a multi-touch event, obtaining coordinates of touch points and coordinates of locations of file icons, and determining whether the touch points are respectively located on the locations of the file icons;
when determining that the touch points are respectively located on the locations of the file icons, determining whether the touch event is a long-touch event by calculating the duration from the time when fingers touch and hold the file icons to the time when the fingers are taken off the file icons;
when determining that the touch event is a long-touch event, activate a long-touch sliding mode of the file icons; when the file icons are slid toward each other under the long-touch sliding mode, obtaining coordinates of locations of the slid file icons; when determining that the location distance between the file icons is less than or equal to a predetermined second threshold, releasing the long-touch event, activating a new folder creation mode, and automatically creating a new folder based on the file icons under the new folder creation mode.

6. The method according to claim 5, wherein determining whether the touch event is a long-touch event comprises:
when the duration from the time when fingers touch and hold the file icons to the time when the fingers are taken off the file icons does not reach a predetermined first threshold, a finger-release event is triggered, determining that the touch event is not a long-touch event;
when the duration from the time when fingers touch and hold the file icons to the time when the fingers are taken off the file icons reaches the first threshold, a finger-release event is triggered, determining that the touch event is a long-touch event.

7. The method according to claim 6, wherein creating a new folder based on the file icons comprises:
when the two file icons are icons of application programs themselves, directly creating the new folder;
when the two file icons are icons of shortcuts of application programs, creating the new folder after obtaining locations of source files of the application programs according to the shortcuts.

8. The method according to claim 7, when creating a new folder based on the file icons, the method further comprising: prompting whether to rename the created new folder, or name the created new folder "New Folder" by default.

9. The method according to claim 8, after the prompt, further comprising:
instantly naming the created new folder according to an obtained file name, or naming the created new folder after the prompt is skipped.
